# EUROPEAN PATENT SPECIFICATION

(11) **EP 4 073 392 B1**
(45) Date of publication and mention of the grant of the patent: **14.08.2024**
(21) Application number: 20830325.5
(22) Date of filing: 10.12.2020
(51) Int. Cl.: F16B 7/04, F16B 7/18, F16B 25/00, F16B 12/40, F16B 12/50, F16B 12/36

(54) **SHELF STRUCTURE**
REGALSTRUKTUR
STRUCTURE D'ÉTAGÈRE

(30) Priority: 11.12.2019 IT 201900023568
(43) Date of publication of application: 19.10.2022
(73) Proprietor: Moretti & C. 2 s.r.l., 61026 Lunano (IT)
(72) Inventor: MORETTI, Gisfredo, I 61026 Lunano (IT)
(74) Representative: Cipriani, Guido
(86) International application number: PCT/IB2020/061742
(87) International publication number: WO 2021/116968

(56) References cited:
- EP-A1- 0 485 757
- WO-A1-84/01801
- DE-A1- 4 311 902
- DE-A1- 4 336 282
- DE-U1- 20 110 322
- US-A- 4 116 573

## Description

### Technical Field

The present invention relates to a shelf structure. The structure, made with mutually perpendicular tubular elements, can form the framework of bookcases and wardrobes, as well as kitchen furniture, bathroom furniture and accessories.

For convenience, the mutually perpendicular elements will be identified as uprights and crosspieces below. However, the invention should not be considered limited to a structure extending in height, as it can also be a horizontal structure.

### Background Art

The structures currently on the market use a coupling of uprights and crosspieces by joints that require cutting the uprights into pieces for connection with the crosspieces. Multi-way joints are tightly inserted into the tubular elements functioning as uprights and crosspieces. This entails the production of different joints, both in shape and size, due to the different tubular elements used, and the need for their storage. Furthermore, the manufacture of structures with such joints requires equipment, labor and processing times to such an extent as to determine a considerable cost of the structures produced.

An example of a shelf structure of this kind is described in DE 20110322 U1, in which uprights and crosspieces in the form of cylindrical tubes are joined together in cubic knots provided with blind threaded bores drilled from their faces. Connector elements are used to connect the cubic knots to the uprights and crosspieces, each connector element consisting of a set screw and a tenon. The set screw has a body provided with a circumferential groove, a shank intended to screw into the blind threaded bore of the cubic knot and a head provided with a notch. The tenon, centrally drilled, has a first portion of a first diameter equipped with a diametrical threaded bore and a dowel screwed into the diametrical threaded bore, and a second portion of diameter smaller than the first diameter. The tenon is connected to the set screw, inserted in a central bore of the tenon, by means of the dowel screwed into the diametrical threaded bore; the tip of the dowel is inside the circumferential groove of the set screw. The tenon, in turn, supports the end of an upright or crosspiece with its second portion.

The Applicant deems that the component parts described in patent DE 20110322 U1 can be reduced by eliminating knot and tenon. In this way, it will be possible to reduce the manufacturing time of a shelf structure by decreasing the number of component parts and consequently also the time for its assembly.

WO 1984001801 A1 discloses a connection between uprights and cross members by means of a spring loaded anchoring bolt.

DE4311902A1 and US 411653, similarly to DE 20110322 U1, disclose a set screw for the orthogonal connection by means of a threaded dowel. DE4336282A1 discloses a set screw connection with threaded dowel for a balustrade.

EP0485757B1 discloses a set screw connection with threaded dowel for coaxial support components for a toilet.

As mentioned above, the prior art closest to the present invention is considered that one described in DE 20110322 U1.

### Summary of the Invention

A main purpose of the present invention is to provide a stable coupling between mutually perpendicular tubular elements without the need of separating the upright into segments for the insertion of joints.

Another object of the invention is to allow this coupling between tubular elements which are mutually perpendicular also of different sizes and shapes. Yet another object of the invention is to provide a coupling between mutually perpendicular tubular elements that requires a small number of components.

A further object of the invention is to allow a coupling between mutually orthogonal tubular elements which allows to reduce the assembly time of a structure.

An additional object is to provide a coupling device which allows easy assembly and disassembly of the structure made with it.

Another object of the invention is to provide a joint that can work in joining tubular elements of different profile.

To achieve the aforementioned purposes, the present invention, as defined in claim 1 attached to the present description, provides a shelf structure comprising:
- a plurality of uprights in the form of tubular elements, each having an upright wall with an inner surface,
- a multiplicity of crosspieces perpendicular to the uprights in the form of tubular elements, each crosspiece having a crosspiece wall with an inner surface,
- a multiplicity of cylindrical junction pins, singularly having a maximum diameter cylindrical surface and, at a first end, a portion having a diameter reduced with respect to said maximum diameter cylindrical surface and being provided with an external threading, and, between said first end and a second end, a circumferential groove,
- a threaded dowel intended to be received in the circumferential groove of the cylindrical junction pin,
shelf structure further comprising:
- each upright provided with at least one through bore in its upright wall;
- an internally threaded bush suitable for engaging said external threading of the cylindrical junction pin, the bush being provided with a bore in its bottom; and
- a self-tapping screw passing through said bore formed in the bottom of the bush and being adapted to tap the through bore in the upright wall;
- each crosspiece being provided in its crosspiece wall with at least one threaded through bore;
- each cylindrical junction pin being able to be inserted in a crosspiece so that its cylindrical surface is in tangential contact with the inner surface of the crosspiece wall; and
- the threaded dowel being intended to be screwed into the at least one threaded through bore of the crosspiece and to be received in the circumferential groove of the cylindrical junction pin inside the crosspiece, so as to connect the crosspiece to the cylindrical junction pin.

In order to make the shelf structure according to the present invention, a bore is made on the upright for each connection between upright and crosspiece. The bore on the upright is chosen at the desired height.

Similarly, a single bore is made for the threaded dowel in the crosspiece if the connection is with a single upright, i.e. cantilevered, or two bores are made if the same crosspiece is assembled between two uprights. The bores on the crosspiece are made in the crosspiece in a position determined by the distance of the circumferential groove in the cylindrical junction pin from its end. It is convenient for the circumferential groove to be in the cylindrical junction pin near its second end, that is, the one opposite to the externally threaded portion.

### Brief Description of Drawings

Further features and advantages of the invention will become most evident from the description of an embodiment of a shelf structure illustrated in the accompanying drawings in which:
- Figure 1 is a partial exploded perspective view of component parts of a shelf structure according to the invention;
- Figure 2 is the exploded perspective view of Figure 1 cross-sectioned by a central vertical plane;
- Figure 3 is the assembled perspective view of Figure 1 cross-sectioned by a central vertical plane;

- Figures 4 to 6 are on an enlarged scale a perspective view, a side view and a top plan view, respectively, of a bushing shown in Figures 1 to 3;
- Figure 7 is a cross-section taken along lines A-A in Figure 6;
- Figures 8 to 11 are a perspective view, a side view, a left end view and a right end view, respectively, of a cylindrical junction pin in Figures 1 to 3;
- Figure 12 is a cross-section taken along the lines B-B in Figure 11;
- Figure 13 is a partially exploded perspective view of a shelf structure according to the invention;
- Figures 14 to 19 are perspective views of examples of shelf structures according to the present invention; and
- Figures 20 to 27 are perspective views of examples of crosspiece profiles inside which the cylindrical junction pin in Figures 8 to 11 is positioned.

### Description of Embodiments of the Invention

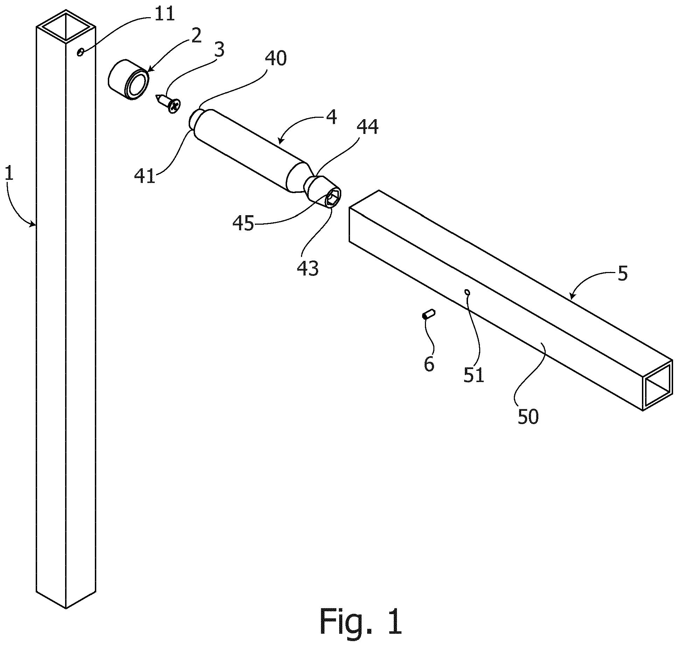

Reference should be made initially to Figures 1 to 3 which are a partial exploded perspective view, a cross-sectional exploded perspective view, and an assembled cross-sectional perspective view, respectively, of component parts of a first embodiment of a shelf structure according to the invention.

The shelf structure is achieved with mutually perpendicular tubular elements, i.e. vertical and horizontal elements, which are referred to for convenience in the following as uprights 1 and crosspieces 5. As above mentioned, the shelf structure extends in vertical direction as usually, or in horizontal direction in order to form for example a raised-floor: in this second case the uprights 1 have a length reduced with respect to the crosspieces 5.

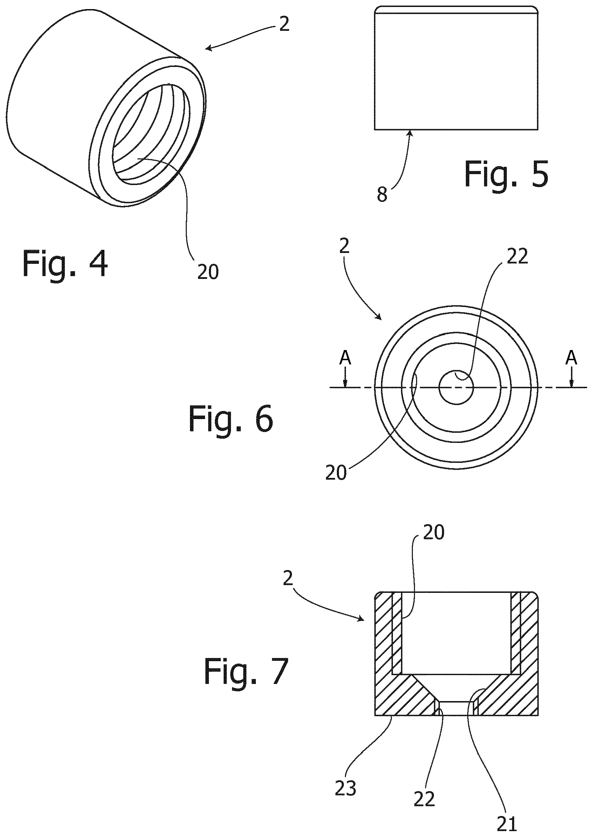

Indicated as 2 is a bushing shown in greater detail in Figures 4 to 6 which are a perspective view, a side view and a plan view from above, respectively, of the bushing 2. Figure 7 shows a cross-section view taken along the lines A-A in Figure 6. With particular reference to Figure 7, it is noted that the bushing 2 has a cylindrical threaded cavity 20 communicating with a tapered cavity 21 and lastly with a threaded bore 22 passing through the bottom 23 of the bushing 2.

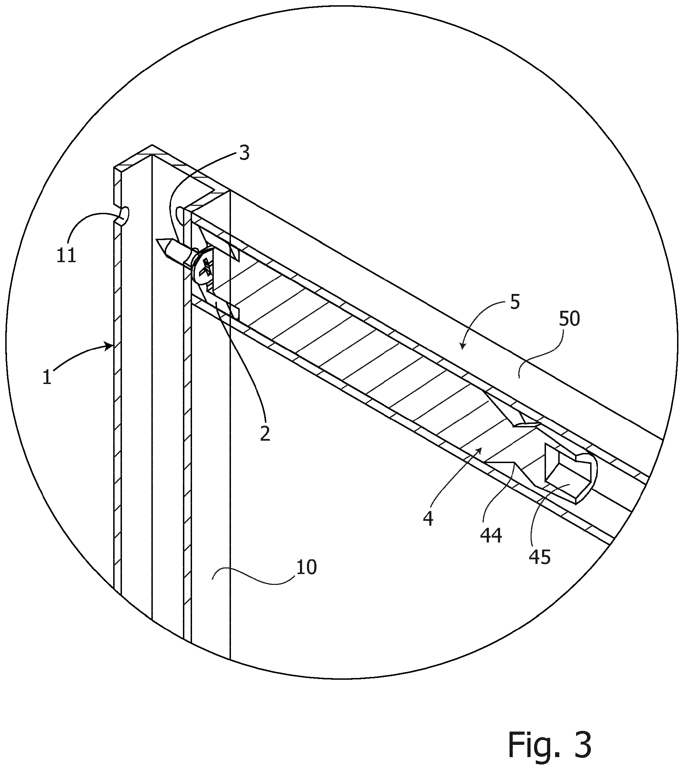

Returning to figures 1 to 3, indicated as 3 is a self-tapping screw or Parker screw, with a diameter such as to pass through the threaded bore 22 obtained in the bottom 23 of the bushing 2. Concentrically in the upright 1, a bore 11 is made in one of its walls 10, the bore 11 being intended to be tapped by the self-tapping screw 3. As shown in figure 3, when the self-tapping screw 3 is fully screwed into the upright 1, the bushing 2 is firmly held to the wall 10 of the upright 1.

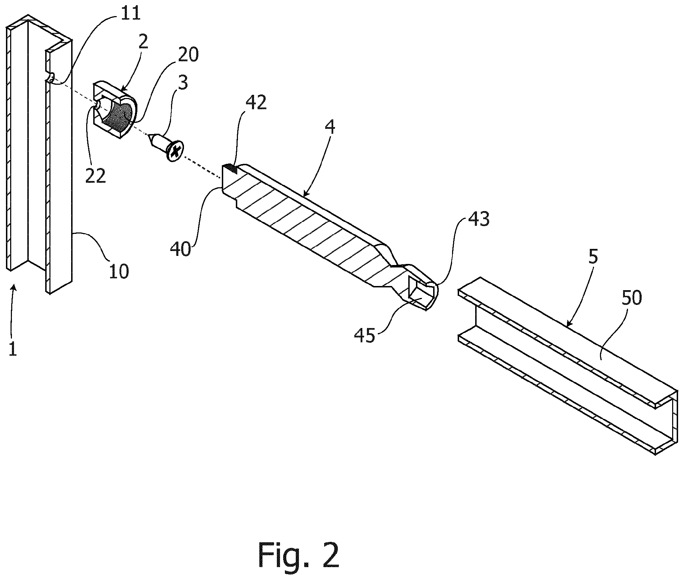

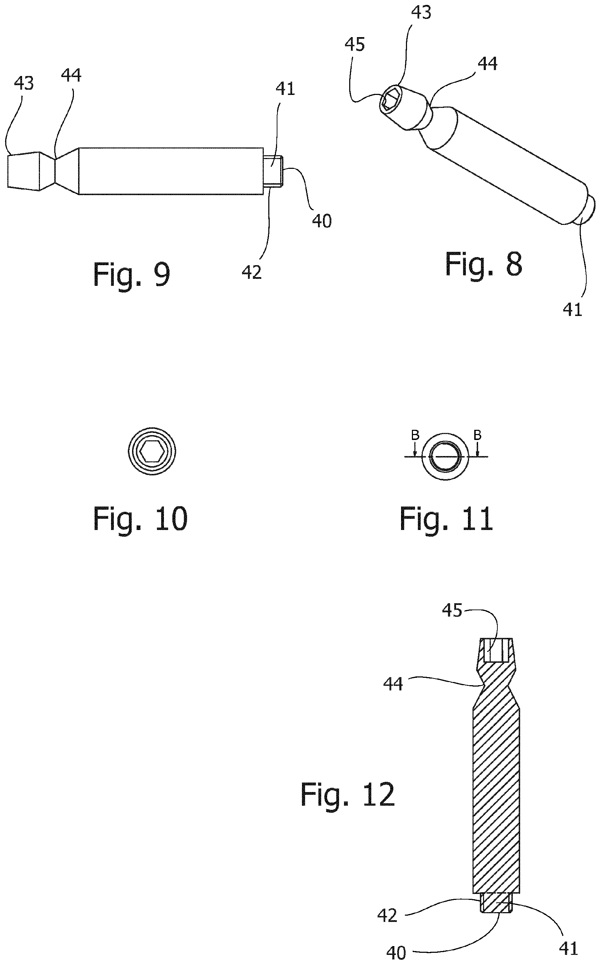

Reference numeral 4 indicates a cylindrical junction pin, having, at a first end 40, a portion 41 of reduced diameter with respect to the maximum diameter of the cylindrical junction pin 4. The maximum diameter of the cylindrical junction pin 4 is advantageously equal to the external diameter of the bushing 2. The portion 41 is provided with an external threading 42 shown in Figures 2 and 12. A circumferential groove 44 is provided between the first end 40 and a second end 43 of the cylindrical junction pin 4. In its second end 43, the cylindrical junction pin 4 has a lowered polygonal head 45 for the insertion of an Allen wrench, not shown. The cylindrical junction pin 4 is also shown in Figures 8 to 11 that are a perspective view, a side view, a left end view and a right end view, respectively, of the cylindrical junction pin 4, and in Figure 12 that is a cross-section view taken along lines B-B in Figure 11.

As shown in Figure 3, the cylindrical junction pin 4 is screwed onto the bushing 2 thanks to the mutual engagement of the external threading 42 with the internal threading 20. The crosspiece 5 is inserted externally on the assembly of bushing 2, self-tapping screw 3 and cylindrical junction pin 4 and retained there by means of a threaded dowel 6, inserted in a through bore 51 made in a wall 50 of the crosspiece 5, as shown in Figure 1.

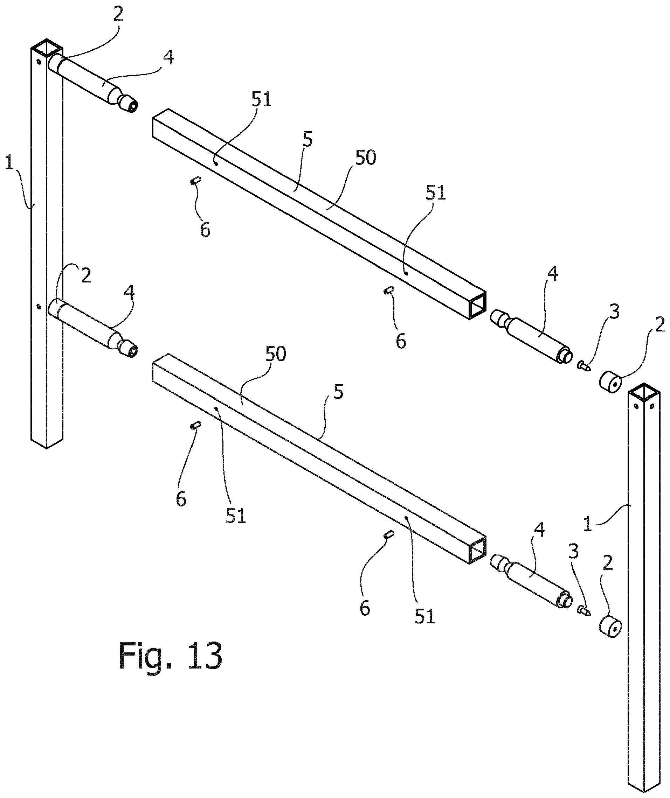

Figure 13 shows a partially exploded perspective view of a structure comprising four cylindrical junction pins 4 according to the first embodiment of the invention, shown in Figures 1 to 12. In Figure 13 equal parts are indicated with the same reference numerals. It should be understood that the assembly of the crosspieces with the uprights is improved, as mentioned above, by inserting the threaded dowels 6 in the crosspieces 5 in correspondence with the circumferential grooves 44 of the cylindrical junction pins 4. Unlike the cantilevered structure of Figures 1 to 3, Figure 13 shows a two-upright structure. Therefore, two through bores 51 are provided for the threaded dowels 6 for each crosspiece 5.

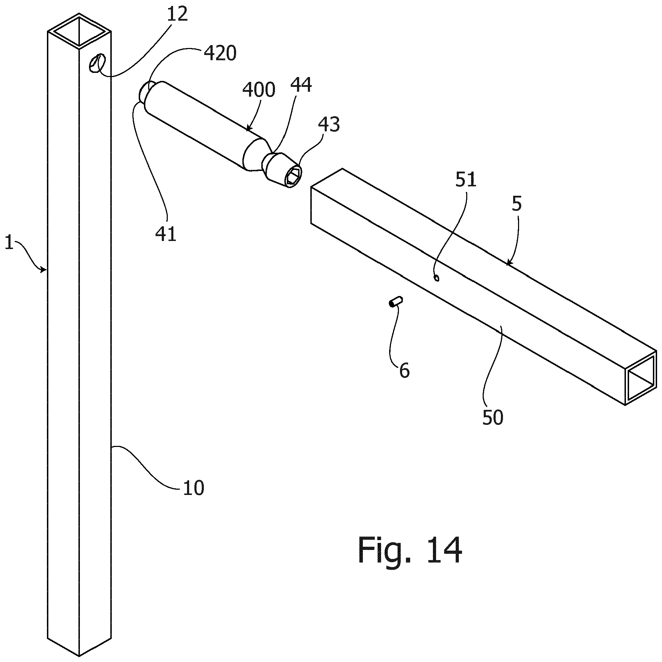

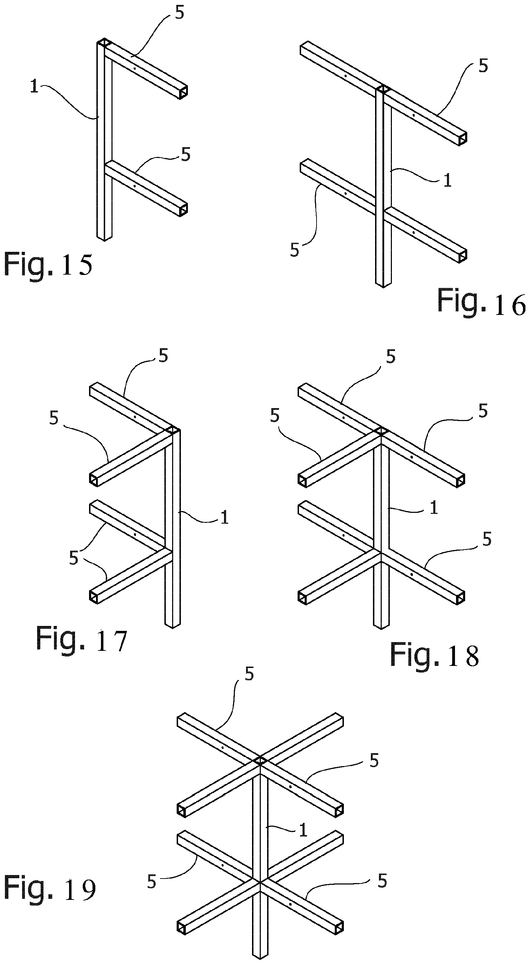

Figures 14 to 19 show perspective views of examples of shelf structures according to the present invention. These figures do not require further explanation.

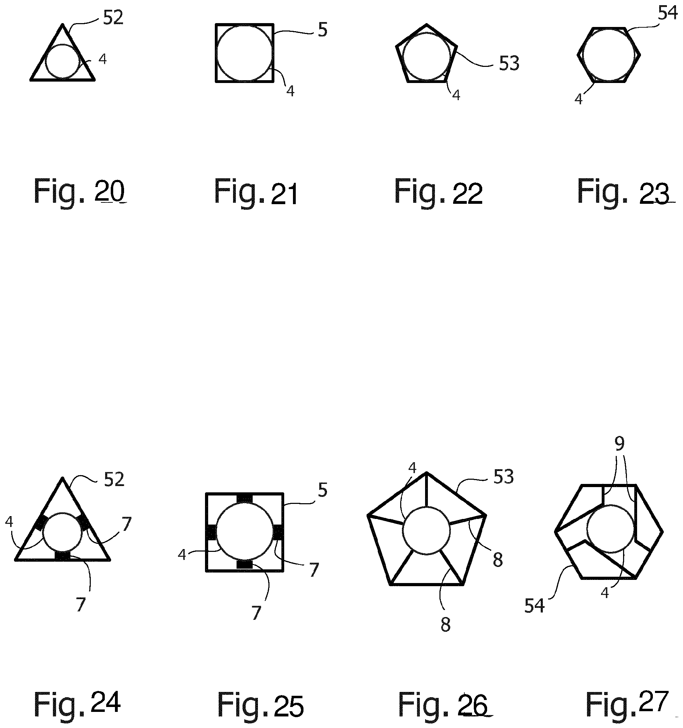

Figures 20 to 27 show perspective views of examples of crosspiece profiles inside which the cylindrical junction pin 4 or 400 of the shelf structure according to the present invention is positioned. Figure 20 shows a crosspiece with a triangular profile indicated by 52, Figure 21 a crosspiece 5 with a square profile, Figure 22 a crosspiece 53 with a pentagonal profile, Figure 23 a crosspiece 54 with a hexagonal profile.

With reference to Figure 24, it is shown that the internal surface of the wall of the triangular profile crosspiece 52 has projections 7 arranged at 120° from each other to come into contact with the external surface of the cylindrical junction pin 4. In the Figure 25 it is shown that the internal surface of the wall of the square profile crosspiece 5 has projections 7 arranged at 90° from each other to come into contact with the external surface of the cylindrical junction pin 4. Figure 26 shows that the internal surface of the wall of the pentagonal profile crosspiece 53 has projections 8 arranged according to bisectors of the internal angles to come into contact with the external surface of the cylindrical junction pin 4. Figure 27 shows that the internal surface of the wall of the hexagonal profile crosspiece 54 has inserts 9 able to center the cylindrical junction pin 4 coming into contact with its external surface.

Even if in Figures 20 to 27 only crosspieces with different profiles are shown, it should be evident that the same profiles can be used for the uprights 1.

When the shelf structure according to the present invention must be disassembled, it is sufficient to remove the threaded dowels from the circumferential grooves of the cylindrical junction pins to obtain the mutual separation of the uprights.

## Claims

1. A shelf structure comprising:
- a plurality of uprights (1) in the form of tubular elements, each having an upright wall (10) with an inner surface,
- a multiplicity of crosspieces (5; 52; 53; 54) perpendicular to the uprights (1) in the form of tubular elements, each crosspiece (5; 52; 53; 54) having a crosspiece wall (50) with an inner surface,
- a multiplicity of cylindrical junction pins (4), singularly having a maximum diameter cylindrical surface and, at a first end (40), a portion (41) having a diameter reduced with respect to said maximum diameter cylindrical surface and being provided with an external threading (42), and, between said first end (40) and a second end (43), a circumferential groove (44),
- a threaded dowel (6) intended to be received in the circumferential groove (44) of the cylindrical junction pin (4),
**characterized in that** the shelf structure further comprises:
- each upright (1) provided with at least one through bore (11) in its upright wall (10);
- an internally threaded bush (2) suitable for engaging said external threading (42) of the cylindrical junction pin (4), the bush (2) having a bottom and being provided with a bore (22) in its bottom (23); and
- a self-tapping screw (3) passing through said bore (22) formed in the bottom (23) of the bush (2) and being adapted to tap the through bore (11) in the upright wall (10);
each crosspiece (5; 52; 53; 54) being provided in its crosspiece wall (50) with at least one threaded through bore (51);
each cylindrical junction pin (4) being able to be inserted in a crosspiece (5) so that its cylindrical surface is in tangential contact with the inner surface of the crosspiece wall (50); and
the threaded dowel (6) being intended to be screwed into the at least one threaded through bore (51) of the crosspiece (5; 52; 53; 54) and to be received in the circumferential groove (44) of the cylindrical junction pin (4) inside the crosspiece (5; 52; 53; 54), so as to connect the crosspiece (5; 52; 53; 54) to the cylindrical junction pin (4).

2. The shelf structure according to claim 1, wherein the bush (2) has an external diameter equal to the maximum diameter of the cylindrical junction pin (4).

3. The shelf structure according to claim 1, wherein the inner surface of the crosspiece wall (50) has projections (7; 8; 9) suitable for coming into contact with the cylindrical surface of the cylindrical junction pin (4).

4. The shelf structure according to claim 1, wherein said cylindrical junction pin (4) has, in its second end (43), a lowered polygonal head (45) suitable for inserting an Allen wrench.

## Patentansprüche

1. Regalstruktur, umfassend:
- eine Vielzahl von Ständern (1) in Form von rohrförmigen Elementen, die jeweils eine Ständerwand (10) mit einer Innenfläche aufweisen,
- eine Vielzahl von zu den Ständern (1) senkrechten Querträgern (5; 52; 53; 54) in Form von rohrförmigen Elementen, wobei ein jeder Querträger (5; 52; 53; 54) eine Querträgerwand (50) mit einer Innenfläche aufweist,
- eine Vielzahl von zylindrischen Verbindungsstiften (4), die einzeln eine zylindrische Fläche mit maximalem Durchmesser und an einem ersten Ende (40) einen Abschnitt (41) mit einem gegenüber der zylindrischen Fläche mit maximalem Durchmesser verringerten Durchmesser aufweisen und mit einem Außengewinde (42) versehen sind, und zwischen dem ersten Ende (40) und einem zweiten Ende (43) eine Umfangsnut (44),
- einen Gewindedübel (6), der dazu bestimmt ist, in der Umfangsnut (44) des zylindrischen Verbindungsstifts (4) aufgenommen zu werden,
**dadurch gekennzeichnet, dass** die Regalstruktur ferner Folgendes umfasst:
- einen jeden Ständer (1), der mit mindestens einer Durchgangsbohrung (11) in seiner Ständerwand (10) versehen ist;
- eine Buchse (2) mit Innengewinde, die zum Eingriff in das Außengewinde (42) des zylindrischen Verbindungsstifts (4) geeignet ist, wobei die Buchse (2) einen Boden aufweist und mit einer Bohrung (22) in ihrem Boden (23) versehen ist; und
- eine selbstschneidende Schraube (3), die durch die Bohrung (22) verläuft, die im Boden (23) der Buchse (2) ausgebildet ist und angepasst ist, um die Durchgangsbohrung (11) in der Ständerwand (10) zu schneiden;
wobei ein jeder Querträger (5; 52; 53; 54) in seiner Querträgerwand (50) mit mindestens einer durchgehenden Gewindebohrung (51) versehen ist;
wobei ein jeder zylindrische Verbindungsstift (4) in einen Querträger (5) eingesetzt werden kann, so dass seine zylindrische Fläche in tangentialem Kontakt mit der Innenfläche der Querträgerwand (50) steht; und
wobei der Gewindedübel (6) dazu bestimmt ist, in die mindestens eine Gewindedurchgangsbohrung (51) des Querträgers (5; 52; 53; 54) eingeschraubt zu werden und in der Umfangsnut (44) des zylindrischen Verbindungsstifts (4) innerhalb des Querträgers (5; 52; 53; 54) aufgenommen zu werden, um den Querträger (5; 52; 53; 54) mit dem zylindrischen Verbindungsstift (4) zu verbinden.

2. Regalstruktur nach Anspruch 1, wobei die Buchse (2) einen Außendurchmesser aufweist, der gleich dem maximalen Durchmesser des zylindrischen Verbindungsstifts (4) ist.

3. Regalstruktur nach Anspruch 1, wobei die Innenfläche der Querträgerwand (50) Vorsprünge (7; 8; 9) aufweist, die dazu geeignet sind, mit der zylindrischen Fläche des zylindrischen Verbindungsstifts (4) in Kontakt zu kommen.

4. Regalstruktur nach Anspruch 1, wobei der zylindrische Verbindungsstift (4) in seinem zweiten Ende (43) einen abgesenkten polygonalen Kopf (45) aufweist, der zum Einsetzen eines Inbusschlüssels geeignet ist.

## Revendications

1. Structure d'étagère, comprenant :
- une pluralité de montants (1) en forme d'éléments tubulaires, chacun ayant une paroi de montant (10) comportant une surface intérieure,
- une multiplicité de traverses (5 ; 52 ; 53 ; 54) perpendiculaires aux montants (1) en forme d'éléments tubulaires, chaque traverse (5 ; 52 ; 53 ; 54) comportant une paroi (50) de traverse comportant une surface intérieure,
- une multiplicité d'axes (4) de jonction cylindriques, comportant individuellement une surface cylindrique de diamètre maximal et, à une première extrémité (40), une partie (41) ayant un diamètre réduit par rapport à ladite surface cylindrique de diamètre maximal et étant pourvus d'un filetage extérieur (42), et, entre ladite première extrémité (40) et une deuxième extrémité (43), une rainure circonférentielle (44),
- une cheville filetée (6) prévue pour être reçue dans la rainure circonférentielle (44) de l'axe (4) de jonction cylindrique,
**caractérisée en ce que** la structure d'étagère comprend de plus :
- chaque montant (1) pourvu d'au moins un alésage traversant (11) dans sa paroi de montant (10) ;
- une douille à filetage intérieur (2) apte à se mettre en prise avec ledit filetage extérieur (42) de l'axe (4) de jonction cylindrique, la douille (2) comportant un fond et étant pourvue d'un alésage (22) dans son fond (23) ; et
- une vis autotaraudeuse (3) traversant ledit alésage (22) formé dans le fond (23) de la douille (2) et étant adaptée pour tarauder l'alésage traversant (11) dans la paroi de montant (10) ;
chaque traverse (5 ; 52 ; 53 ; 54) étant pourvue dans sa paroi (50) de traverse d'au moins un alésage traversant fileté (51) ;
chaque axe (4) de jonction cylindrique pouvant être insérée dans une traverse (5) de sorte que sa surface cylindrique soit en contact tangentiel avec la surface intérieure de la paroi (50) de traverse ; et
la cheville filetée (6) étant destinée à être vissée dans l'au moins un alésage traversant fileté (51) de la traverse (5 ; 52 ; 53 ; 54) et à être reçue dans la rainure circonférentielle (44) de l'axe (4) de jonction cylindrique à l'intérieur de la traverse (5 ; 52 ; 53 ; 54), de manière à relier la traverse (5 ; 52 ; 53 ; 54) à l'axe (4) de jonction cylindrique.

2. Structure d'étagère selon la revendication 1, dans laquelle la douille (2) a un diamètre extérieur égal au diamètre maximal de l'axe (4) de jonction cylindrique.

3. Structure d'étagère selon la revendication 1, dans laquelle la surface intérieure de la paroi (50) de traverse comporte des saillies (7 ; 8 ; 9) aptes à entrer en contact avec la surface cylindrique de l'axe (4) de jonction cylindrique.

4. Structure d'étagère selon la revendication 1, dans laquelle ledit axe (4) de jonction cylindrique comporte, à sa deuxième extrémité (43), une tête polygonale (45) abaissée adaptée à l'insertion d'une clé Allen.
